# FASCICULE DE BREVET EUROPEEN

(11) **EP 2 740 635 B1**
(45) Date de publication et mention de la délivrance du brevet: **26.04.2017**
(21) Numéro de dépôt: 13194353.2
(22) Date de dépôt: 26.11.2013
(51) Int. Cl.: B60R 21/272

(54) **Générateur de gaz**
Gasgenerator
Gas generator

(30) Priorité: 04.12.2012 FR 1203285
(43) Date de publication de la demande: 11.06.2014
(73) Titulaire: Autoliv Development AB, 447 83 Vårgårda (SE)
(72) Inventeur: Aderum, Tobias, 41470 Göteborg (SE); Svedjenäs, Stefan, 44157 Alingsas (SE); Hörnquist, Niclas, 44831 Floda (SE); Weber, Marcus, 97531 Theres/Untertheres (DE); Drössler, Wolfgang, 82194 Gröbenzell (DE); Schock, Marc, 85757 Karlsfeld (DE); Niedernhuber, Thomas, 82205 Gilching (DE)
(74) Mandataire: Vigand, Philippe

(56) Documents cités:
- EP-A1- 1 405 775
- WO-A1-2013/029822
- US-A1- 2005 017 490

## Description

La présente invention concerne de manière générale un générateur de gaz pour gonfler un coussin de sécurité installé dans un véhicule automobile, et en particulier un générateur de gaz capable de diffuser dans le coussin de sécurité une quantité de gaz adaptée à une sévérité de choc véhicule.

Il est connu dans l'art antérieur des générateurs de gaz adaptatifs pour coussin de sécurité. Le document EP 2 229 296 B1 décrit un générateur de gaz adaptatif comprenant deux allumeurs qui peuvent être activés indépendamment l'un de l'autre pour chacun définir une quantité de gaz à diffuser dans le coussin de sécurité. En contrepartie, ce générateur de gaz présente notamment une architecture interne complexe avec des mécanismes agencés en double pour ouvrir chacun des orifices de décharge de réserves de gaz sous pression. Il en résulte d'une part que le coût de fabrication avec ces nombreux composants est élevé. D'autre part, il faut noter que ces mécanismes sont basés sur le principe de soutenir un opercule mince pendant le stockage, et de supprimer ce soutien pour ouvrir l'opercule, et l'ouverture du deuxième opercule peut poser problème si une partie du gaz s'est déjà échappée par le premier orifice de sorte que la pression résiduelle est diminuée, et la force d'appui peut ne pas être suffisante pour pousser le support et ouvrir l'opercule. Un autre art antérieur est connue par EP 1 405 775 A1 qui correspond au préambule de la revendication 1. Un but de la présente invention est de répondre aux inconvénients du document de l'art antérieur mentionné ci-dessus et en particulier, tout d'abord, de proposer une générateur de gaz qui présente un mécanisme d'ouverture simple et fiable, tout en offrant la possibilité d'adapter le débit de gaz diffusés dans le coussin de sécurité.

Pour cela un premier aspect de l'invention concerne un générateur de gaz pour coussin de sécurité selon la revendication 1.

Le générateur selon cette mise en oeuvre présente des réserves de gaz simples, avec un seul orifice de décharge chacune. Cependant le générateur permet d'adapter le débit des gaz diffusés en cours de fonctionnement. En effet, la première réserve de gaz comprenant deux chambres séparées par une cloison avec deux passages de gaz, dont l'un peut être ouvert indépendamment de l'ouverture des orifices de décharge, il y a la possibilité de vider lentement la deuxième chambre (avec seul le premier passage de gaz ouvert), ou rapidement (en ouvrant en plus le deuxième passage de gaz). En d'autres termes, la première réserve de gaz comprend deux chambres agencées en série l'une de l'autre, et la surface de passage des gaz de la chambre amont (la deuxième chambre) vers la chambre aval (la première chambre) est ajustable par le mécanisme d'obstruction du deuxième passage de gaz, indépendamment de l'ouverture des réserves de gaz. Pour obtenir un fonctionnement rapide, on peut mettre la première chambre en communication directe avec le premier orifice de décharge : les gaz de la première chambre ne rencontrent aucun obstacle lors de leur vidange. On peut alors obtenir différents scénarios de fonctionnement, en fonction de l'ouverture ou non du deuxième passage de gaz. Autrement dit, la fonction d'ouverture de la réserve de gaz est indépendante de la fonction de régulation du débit. Les fonctions sont indépendantes l'une de l'autre, effectuées par des composants distincts, ce qui offre une flexibilité sur la conception, et permet par exemple d'agencer les deux mécanismes sur l'axe du générateur si ce dernier est de forme allongée et cylindrique. Enfin, le remplissage des deux chambres se fait simultanément lors de l'assemblage, car le premier passage de gaz offre une communication ouverte en permanence entre les deux chambres.

Selon un mode de réalisation, le mécanisme d'obstruction est agencé pour obstruer le dit au moins un deuxième passage de gaz (c'est-à-dire pour former un obstacle au passage de gaz de la première réserve de gaz) et pour ouvrir le dit au moins un deuxième passage de gaz indépendamment de l'ouverture du premier orifice de décharge et du deuxième orifice de décharge (effectuées par le premier actionneur).

Selon un mode de réalisation, le mécanisme d'obstruction comprend un deuxième actionneur agencé pour ouvrir ledit au moins un deuxième passage de gaz. L'ouverture du deuxième passage de gaz est réalisée en faisant fonctionner le deuxième actionneur.

Selon un mode de réalisation, la deuxième chambre est agencée à l'intérieur de la première réserve de gaz, et le deuxième actionneur est maintenu en place par une paroi de la première chambre différente de la paroi comprenant le premier et le deuxième passage de gaz. Le deuxième actionneur est déporté par rapport à la deuxième chambre, ce qui donne plus de flexibilité sur la conception du générateur de gaz.

Selon un mode de réalisation, le deuxième actionneur est agencé sur une paroi extérieure du générateur de gaz. Cette mise en oeuvre facilite la connexion du deuxième actionneur avec un organe de commande, telle qu'une carte électronique de gestion par exemple, car le deuxième actionneur présente forcément une portion à l'extérieur du générateur de gaz.

Selon un mode de réalisation, le premier orifice de décharge est fermé par un premier opercule, le deuxième orifice de décharge est fermé par un deuxième opercule, et le premier allumeur est agencé pour commander un premier mécanisme avec un support mobile:
- depuis une première position dans laquelle le support mobile soutient le premier et le deuxième opercule pour reprendre une partie des efforts exercés sur le premier et le deuxième opercule par les gaz sous pression,
- vers une deuxième position dans laquelle le support mobile ne soutient plus le premier et le deuxième opercule.

Le générateur selon cette mise en oeuvre comprend un premier mécanisme avec un support mobile qui dans une première position soutient les opercules de fermeture des réserves de gaz. Cet agencement confère une grande robustesse à la fonction de stockage, car les efforts exercés sur les opercules sont repris par le support mobile. Enfin, le premier actionneur lors de son fonctionnement force le support mobile à passer dans une deuxième position dans laquelle les opercules ne sont plus soutenus : la pression à l'intérieur des réserves de gaz provoque alors la rupture des opercules pour permettre aux gaz de sortir vers le coussin de sécurité.

Selon un mode de réalisation, le générateur de gaz comprend une chambre de diffusion agencée entre la première et la deuxième réserve de gaz.

Selon un mode de réalisation, le premier actionneur est un allumeur électro pyrotechnique.

Selon un mode de réalisation, le deuxième actionneur est un allumeur électro pyrotechnique.

Selon un mode de réalisation, le mécanisme d'obstruction comprend un opercule recouvrant le deuxième passage de gaz et agencé pour rompre s'il existe une différence de pression entre la première et la deuxième chambre supérieure à une différence de pression prédéterminée. Le générateur de gaz selon cette mise en oeuvre permet une ouverture du deuxième passage de gaz passive, il n'y a pas besoin d'en commander l'ouverture, celle-ci se fait dés que la première chambre de gaz présente une différence de pression suffisante avec la deuxième chambre, pour rompre l'opercule qui obstrue le deuxième passage de gaz.

Selon un mode de réalisation, la première réserve de gaz comprend de l'hydrogène, et la deuxième réserve de gaz comprend de l'oxygène. Le mélange de la première réserve de gaz contenant l'hydrogène s'écoule plus vite que le mélange de la deuxième réserve de gaz, à cause des propriétés moléculaires de l'hydrogène. Il en résulte que les rapports de concentration évoluent en cours de vidange des deux réserves de gaz, et cela induit un déséquilibre au cours du temps car la première réserve de gaz se vide plus vite. La réaction entre les deux gaz peut être compromise en raison d'un rapport de concentration trop déséquilibré, ce qui conduit à une extinction de la combustion. La partition de la première réserve de gaz en deux chambres, combinée avec l'ouverture du deuxième passage de gaz au cours de la vidange permet de rétablir, en cours de vidange, l'équilibre de combustion entre l'hydrogène et l'oxygène.

Un autre scénario également possible est de pouvoir libérer le contenu de la deuxième chambre lorsque la combustion est terminée, pour augmenter le pouvoir de gonflage. En effet, dans le cas des gaz réactifs cités (hydrogène et oxygène), il faut trois moles de gaz réactifs pour obtenir deux moles d'eau gazeuses qui vont se refroidir rapidement, donc perdre du volume. Une possibilité selon cet autre scénario est donc d'initier la combustion en ouvrant les deux réserves de gaz, et lorsque la combustion cesse, le deuxième passage de gaz de la deuxième chambre est ouvert, pour libérer rapidement le reste de l'hydrogène. Dans ce cas, ce dernier et l'oxygène de la deuxième réserve de gaz vont aller dans le coussin de sécurité sans brûler et donc y maintenir la pression pour compenser la perte de volume (d'autant plus que la vidange dans le générateur refroidit les gaz, qui se réchauffent dans le coussin de sécurité, en y augmentant la pression). On obtient donc un procédé de gonflage d'un coussin de sécurité qui comprend :
- une première étape de vidange de gaz réactifs, avec combustion de ces derniers,
- une deuxième étape d'extinction,
- une troisième étape d'ouverture du deuxième passage de gaz,
- une quatrième étape de vidange du reste des gaz, avec la deuxième chambre se vidant au travers du premier et du deuxième passage de gaz.

Un second aspect de l'invention est un module de sécurité comprenant au moins un générateur de gaz selon le premier aspect de l'invention.

Un dernier aspect de l'invention est un véhicule automobile comprenant au moins un générateur de gaz selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe d'un générateur de gaz selon l'invention ;
- la figure 2 représente un détail du générateur de gaz de la figure 1.

Il est entendu que dans la présente description, le gaz dihydrogène est dénommé hydrogène, et le gaz dioxygène est dénommé oxygène.

Dans la présente demande, il est fait référence à un gaz contenu dans une réserve de gaz, susceptible de réagir avec un autre gaz, contenue dans une autre réserve de gaz. Il faut comprendre que ces deux gaz sont par nature susceptibles de réagir ensemble. En d'autres termes, dès que certaines conditions sont réunies, une réaction entre ces deux est nécessairement obtenues. Par exemple une combustion, si les deux gaz se mélangent et que de la chaleur est apportées sous la forme d'une étincelles par exemple.

Il est également fait référence à des orifice de décharge. Ce sont des orifice au travers desquels les réserves de gaz se vident vers l'extérieur de ces réserves de gaz.

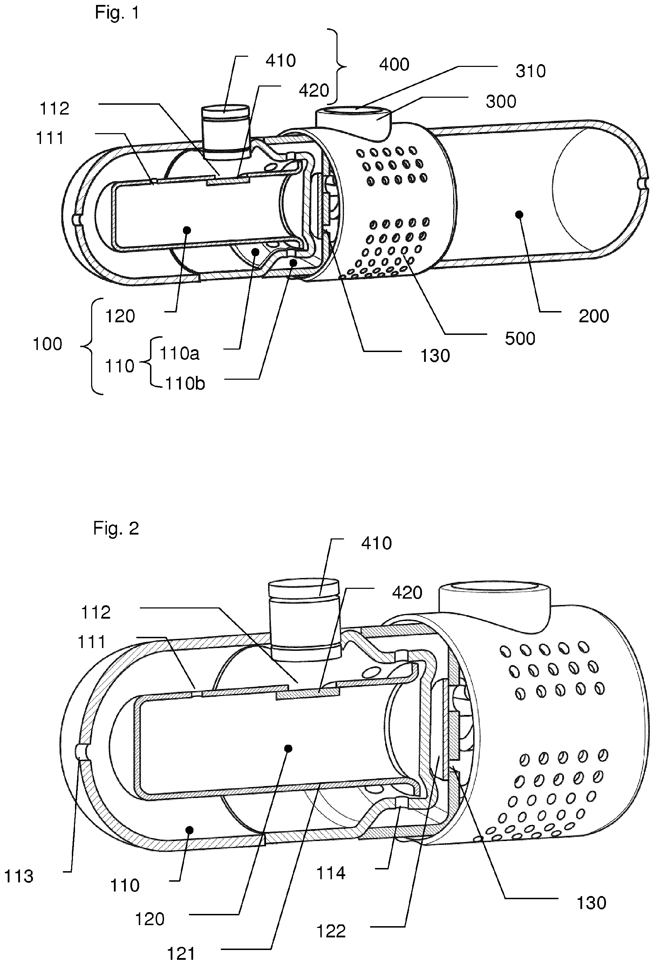

La figure 1 représente un générateur de gaz selon l'invention en coupe. Il comporte une première réserve de gaz 100 et une deuxième réserve de gaz 200, séparées par une chambre de diffusion 500. Un premier allumeur électro pyrotechnique 310 faisant partie d'un premier mécanisme 300 est agencé pour ouvrir les deux réserves de gaz 100 et 200. A cet effet, un orifice de décharge est agencé entre chaque réserve de gaz et la chambre de diffusion 500, et l'allumeur 310 lors de son fonctionnement ouvre ces deux orifices de décharge. Une réalisation possible est d'avoir un mécanisme 300 de soutient des opercules qui ferment les orifices de décharge pendant la phase de stockage, et le fonctionnement de l'allumeur 310 supprime ce soutient, ce qui provoque la rupture des opercules de fermeture. Sur la figure 1, seul le premier orifice de décharge 130 entre la première réserve de gaz 100 et la chambre de diffusion 500 est représenté.

La première réserve de gaz 100 peut contenir un gaz combustible, tel que de l'hydrogène par exemple, et la deuxième réserve de gaz 200 peut contenir un gaz comburant tel que de l'oxygène par exemple. Lors de l'ouverture de la première et de la deuxième réserve de gaz 100, 200, le gaz combustible va se mélanger au gaz comburant et une combustion est initiée par les particules chaudes et gaz chauds issus de l'allumeur 310 qui a provoqué l'ouverture des réserves de gaz 100 et 200.

La première réserve de gaz 100 est partitionnée en une première chambre 110 et une deuxième chambre 120. La première chambre 110 comprend deux parties 110a et 110b, mais les orifices 114 représentés sur la figure 2 sont dimensionnés de telle sorte qu'ils n'opposent aucune gêne à l'écoulement des gaz, si bien que la chambre 110 peut être considérée comme un seul espace fermé.

Par contre, la chambre 120 est séparée de la chambre 110 par une paroi qui présente un premier passage de gaz 111 ouvert, et un deuxième passage de gaz 112 obturé. Le premier passage de gaz 111 présente une surface de passage inférieure à la surface du premier orifice de décharge 130. Ainsi, lors de la phase de stockage, la pression dans la première chambre 110 et dans la deuxième chambre 120 est homogène, mais lors de la vidange après ouverture du premier orifice de décharge 130, les gaz contenus dans la deuxième chambre 120 sont freinés lors de leur passage dans la première chambre 110. Les conditions de pressions lors de cette phase de vidange sont différentes entre la première chambre 110 et la deuxième chambre 120, alors qu'en raison du grand nombre d'orifices 114, les conditions de pression sont sensiblement les mêmes entre la partie 110a et la partie 110b de la première chambre 110, même lors de la vidange.

La paroi 121 qui sépare la première chambre 110 de la deuxième chambre 120 présente un deuxième passage de gaz 112, obturé par un opercule 420, qui fait partie du mécanisme d'obstruction 400 comprenant également le deuxième allumeur électro pyrotechnique 410, agencé sur la paroi externe de la première réserve de gaz 100, en regard de l'opercule 420.

La figure 2 représente en détail la première réserve de gaz 100 du générateur de gaz de la figure 1, pendant la phase de stockage de gaz. La première réserve de gaz 100 comprend un premier orifice de décharge 130 qui est scellé par un opercule 122 et un orifice de remplissage 113 qui est scellé par un bouchon (non représenté) soudé après remplissage. Lors du remplissage, les gaz injectés par l'orifice de remplissage 113 passent par les orifices 114 pour occuper les parties 110a et 110b de la première chambre 110, et passent par le premier passage de gaz 111 pour occuper la deuxième chambre 120, de telle sorte que la pression est la même dans les deux chambres 110 et 120.

Comme expliqué plus haut, lors d'un choc véhicule, le premier allumeur 310 est initié et ouvre le premier orifice 130, de sorte que la première chambre 110 se vide par le premier orifice de décharge 130 rapidement, et la deuxième chambre 120 se vide dans la première chambre 110 par le premier passage de gaz 111 plus lentement, car la surface du premier passage de gaz 111 est faible. S'il y a besoin d'un plus grand débit de gaz, il est possible d'augmenter le débit en ouvrant le deuxième passage de gaz 112. A cet effet, le deuxième allumeur 410 est initié et ouvre le deuxième passage de gaz 112 en brisant l'opercule 420, qui est agencé en regard du deuxième allumeur 410, sur le trajet des gaz éjectés sous pression hors du deuxième allumeur 410. L'ouverture du deuxième passage de gaz 112 peut se faire avec une onde de pression générée par le deuxième allumeur 410 comme décrit, mais on peut envisager d'utiliser un projectile mis en mouvement par le deuxième allumeur 410. On peut également envisager de dimensionner l'épaisseur de l'opercule 420 (ou lui choisir une matière adéquate) de sorte que ce dernier se rompe dès qu'il existe une différence de pression suffisante entre la première chambre 110 et la deuxième chambre 120. L'utilisation du deuxième allumeur 410 n'est plus nécessaire.

Une fois le deuxième passage de gaz 112 ouvert par le deuxième allumeur 410, la deuxième chambre 120 se vide dans la première chambre 110 par le premier passage de gaz 111 et par le deuxième passage de gaz 112, si bien que le débit est augmenté. On peut avoir la surface du premier passage de gaz 111 inférieure à la surface du premier orifice de décharge 130, et la somme des surfaces du premier passage de gaz 111 et du deuxième passage de gaz 112 supérieure à la surface du premier orifice de décharge 130.

Comme exposé ci-dessus, la première réserve de gaz 100 peut contenir de l'hydrogène, et la deuxième réserve de gaz 200 peut contenir de l'oxygène. Les proportions d'hydrogène et d'oxygène dans chaque réserve de gaz sont prévues pour favoriser une bonne combustion. Par exemple, un mélange en masse avec 45%±15% d'hydrogène, le reste en argon et hélium pour la première réserve de gaz 100, et un mélange en masse avec 20%±5% d'oxygène, le reste en argon et hélium pour la deuxième réserve de gaz 200 donnent une bonne combustion.

Cependant, le mélange de la première réserve de gaz 100 contenant l'hydrogène s'écoule plus vite que le mélange de la deuxième réserve de gaz 200, à cause des propriétés moléculaires de l'hydrogène. Il en résulte que les rapports de concentration sont corrects en début de vidange des deux réserves de gaz, mais cela va se déséquilibrer au cours du temps car la première réserve de gaz 100 se vide plus vite. La partition de la première réserve de gaz en deux chambres 110 et 120, combinée avec l'ouverture du deuxième passage de gaz 112 permet de rétablir en cours de vidange l'équilibre de combustion entre l'hydrogène et l'oxygène.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Générateur de gaz pour coussin de sécurité, comprenant :
- une première réserve de gaz (100) sous pression, contenant au moins un premier gaz,
- une deuxième réserve de gaz (200) sous pression, contenant au moins un deuxième gaz susceptible de réagir avec le premier gaz,
- un premier actionneur (310) agencé pour ouvrir dans la première réserve de gaz (100) un premier orifice de décharge (130) présentant une première surface de décharge et un deuxième orifice de décharge dans la deuxième réserve de gaz (200),
dans lequel la première réserve de gaz (100) est partitionnée en au moins une première chambre (110) et une deuxième chambre (120), la première chambre (110) étant en communication avec le premier orifice de décharge (130),
**caractérisé en ce que** la deuxième chambre (120) est séparée de la première chambre (110) par une paroi (121) comprenant :
- au moins un premier passage de gaz (111) de la première chambre (110) vers la deuxième chambre (120), présentant une surface de passage ouverte et inférieure à la première surface de décharge, et
- au moins un deuxième passage de gaz (112) de la première chambre (110) vers la deuxième chambre (120), obstrué,
et **en ce que** :
le générateur comprend un mécanisme d'obstruction (400) agencé pour obstruer le dit au moins un deuxième passage de gaz (112) et agencé pour ouvrir le dit au moins un deuxième passage de gaz (112) indépendamment du premier actionneur (310) agencé pour ouvrir le premier orifice de décharge (130).

2. Générateur de gaz selon la revendication 1, **caractérisé en ce que** le mécanisme d'obstruction (400) comprend un deuxième actionneur (410) agencé pour ouvrir ledit au moins un deuxième passage de gaz.

3. Générateur de gaz selon la revendication 2, **caractérisé en ce que** la deuxième chambre (120) est agencée à l'intérieur de la première réserve de gaz (100), et **en ce que** le deuxième actionneur (410) est maintenu en place par une paroi de la première chambre (110) différente de la paroi (121) comprenant le premier et le deuxième passage de gaz (111, 112).

4. Générateur de gaz selon la revendication 2 ou 3, **caractérisé en ce que** le deuxième actionneur (410) est agencé sur une paroi extérieure du générateur de gaz.

5. Générateur de gaz selon l'une des revendications 1 à 4, **caractérisé en ce que** le premier orifice de décharge (130) est fermé par un premier opercule (122), **en ce que** le deuxième orifice de décharge est fermé par un deuxième opercule, **en ce que** le premier allumeur (310) est agencé pour commander un premier mécanisme (300) avec un support mobile:
- depuis une première position dans laquelle le support mobile soutient le premier et le deuxième opercule pour reprendre une partie des efforts exercés sur le premier et le deuxième opercule par les gaz sous pression,
- vers une deuxième position dans laquelle le support mobile ne soutient plus le premier et le deuxième opercule.

6. Générateur de gaz selon l'une des revendications 1 à 5, **caractérisé en ce qu'**il comprend une chambre de diffusion (500) agencée entre la première et la deuxième réserve de gaz.

7. Générateur de gaz selon l'une des revendications 1 à 6, **caractérisé en ce que** le premier actionneur (310) est un allumeur électro pyrotechnique.

8. Générateur de gaz selon l'une des revendications 2 et 3 à 7 dans leur dépendance à la revendication 2, **caractérisé en ce que** le deuxième actionneur (410) est un allumeur électro pyrotechnique.

9. Générateur de gaz selon la revendication 1, **caractérisé en ce que** le mécanisme d'obstruction (300) comprend un opercule (120) recouvrant le deuxième passage de gaz (112) et agencé pour rompre s'il existe une différence de pression entre la première et la deuxième chambre supérieure à une différence de pression prédéterminée.

10. Générateur de gaz selon l'une des revendications 1 à 9, **caractérisé en ce que** la première réserve de gaz (100) comprend de l'hydrogène, et **en ce que** la deuxième réserve de gaz (200) comprend de l'oxygène.

11. Module de sécurité comprenant au moins un générateur de gaz selon l'une des revendications 1 à 10.

12. Véhicule automobile comprenant au moins un générateur de gaz selon l'une des revendications 1 à 10.

## Patentansprüche

1. Gasgenerator für einen Airbag, umfassend:
- einen ersten Vorratsbehälter (100) für unter Druck stehendes Gas, der mindestens ein erstes Gas enthält,
- einen zweiten Vorratsbehälter (200) für unter Druck stehendes Gas, der mindestens ein zweites Gas enthält, das mit dem ersten Gas reagieren kann,
- ein erstes Betätigungselement (310), das so angeordnet ist, dass es in dem ersten Gasvorratsbehälter (100) eine erste Ausstoßöffnung (130) öffnet, die eine erste Ausstoßfläche aufweist, und eine zweite Ausstoßöffnung in dem zweiten Gasvorratsbehälter (200),
wobei der erste Gasvorratsbehälter (100) in mindestens eine erste Kammer (110) und eine zweite Kammer (120) unterteilt ist, wobei die erste Kammer (110) mit der ersten Ausstoßöffnung (130) in Verbindung steht,
**dadurch gekennzeichnet, dass** die zweite Kammer (120) von der ersten Kammer (110) durch eine Wand (121) getrennt ist, die Folgendes umfasst:
- mindestens einen ersten Gasdurchlass (111) von der ersten Kammer (110) zur zweiten Kammer (120), der eine offene Durchlassfläche aufweist, die kleiner ist als die erste Ausstoßfläche, und
- mindestens einen zweiten Gasdurchlass (112) von der ersten Kammer (110) zur zweiten Kammer (120), der versperrt ist,
und dadurch, dass:
der Generator einen Versperrungsmechanismus (400) umfasst, der so angeordnet ist, dass er den mindestens einen zweiten Gasdurchlass (112) versperrt, und so angeordnet ist, dass er den mindestens einen zweiten Gasdurchlass (112) unabhängig vom ersten Betätigungselement (310) öffnet, das so angeordnet ist, dass es die erste Ausstoßöffnung (130) öffnet.

2. Gasgenerator nach Anspruch 1, **dadurch gekennzeichnet, dass** der Versperrungsmechanismus (400) ein zweites Betätigungselement (410) umfasst, das so angeordnet ist, dass es den mindestens einen zweiten Gasdurchlass öffnet.

3. Gasgenerator nach Anspruch 2, **dadurch gekennzeichnet, dass** die zweite Kammer (120) innerhalb des ersten Gasvorratsbehälters (100) angeordnet ist, und dadurch, dass das zweite Betätigungselement (410) von einer Wand der ersten Kammer (110) an ihrem Platz gehalten wird, die sich von der Wand (121) unterscheidet, die den ersten und den zweiten Gasdurchlass (111, 112) umfasst.

4. Gasgenerator nach Anspruch 2 oder 3, **dadurch gekennzeichnet, dass** das zweite Betätigungselement (410) an einer Außenwand des Gasgenerators angeordnet ist.

5. Gasgenerator nach einem der Ansprüche 1 bis 4, **dadurch gekennzeichnet, dass** die erste Ausstoßöffnung (130) mit einer ersten Abdeckung (122) verschlossen ist, dadurch, dass die zweite Ausstoßöffnung mit einer zweiten Abdeckung verschlossen ist, dadurch, dass der erste Zünder (310) so angeordnet ist, dass er einen ersten Mechanismus (300) mit einer beweglichen Haltevorrichtung:
- aus einer ersten Position, in der die bewegliche Haltevorrichtung die erste und die zweite Abdeckung hält, damit sie einen Teil der von den unter Druck stehenden Gasen auf die erste und die zweite Abdeckung ausgeübten Kräfte aufnimmt,
- in eine zweite Position steuert, in der die bewegliche Haltevorrichtung die erste und die zweite Abdeckung nicht mehr hält.

6. Gasgenerator nach einem der Ansprüche 1 bis 5, **dadurch gekennzeichnet, dass** er eine Diffusionskammer (500) umfasst, die zwischen dem ersten und dem zweiten Gasvorratsbehälter angeordnet ist.

7. Gasgenerator nach einem der Ansprüche 1 bis 6, **dadurch gekennzeichnet, dass** das erste Betätigungselement (310) ein elektrisch-pyrotechnischer Zünder ist.

8. Gasgenerator nach einem der Ansprüche 2 und 3 bis 7, wenn abhängig von Anspruch 2, **dadurch gekennzeichnet, dass** das zweite Betätigungselement (410) ein elektrisch-pyrotechnischer Zünder ist.

9. Gasgenerator nach Anspruch 1, **dadurch gekennzeichnet, dass** der Versperrungsmechanismus (300) eine Abdeckung (120) umfasst, die den zweiten Gasdurchlass (112) bedeckt und so angeordnet ist, dass sie zerreißt, wenn ein Druckunterschied zwischen der ersten und der zweiten Kammer besteht, der größer ist als ein vorgegebener Druckunterschied.

10. Gasgenerator nach einem der Ansprüche 1 bis 9, **dadurch gekennzeichnet, dass** der erste Gasvorratsbehälter (100) Wasserstoff umfasst, und dadurch, dass der zweite Gasvorratsbehälter (200) Sauerstoff umfasst.

11. Sicherheitsmodul, das mindestens einen Gasgenerator nach einem der Ansprüche 1 bis 10 umfasst.

12. Kraftfahrzeug, das mindestens einen Gasgenerator nach einem der Ansprüche 1 bis 10 umfasst.

## Claims

1. Gas generator for an airbag, comprising:
- a first compressed-gas reservoir (100) containing at least one first gas,
- a second compressed-gas reservoir (200) containing at least one second gas capable of reacting with the first gas,
- a first actuator (310) adapted to open a first discharge orifice (130) in the first gas reservoir (100), said first discharge orifice having a first discharge area, and a second discharge orifice in the second gas reservoir (200),
wherein the first gas reservoir (100) is partitioned into at least one first chamber (110) and a second chamber (120), the first chamber (110) being in communication with the first discharge orifice (130),
**characterised in that** the second chamber (120) is separated from the first chamber (110) by a wall (121) comprising:
- at least one first gas passage (111) leading from the first chamber (110) to the second chamber (120) and having an open flow area that is smaller than the first discharge area, and
- at least one second gas passage (112) leading from the first chamber (110) to the second chamber (120) and being shut off,
and **in that**
the generator comprises a shut-off mechanism (400) adapted to shut off the said at least one second gas passage (112) and adapted to open the said at least one second gas passage (112) independently of the first actuator (310) adapted to open the first discharge orifice (130).

2. Gas generator according to claim 1, **characterised in that** the shut-off mechanism (400) comprises a second actuator (410) adapted to open the said at least one second gas passage.

3. Gas generator according to claim 2, **characterised in that** the second chamber (120) is arranged inside the first gas reservoir (100) and **in that** the second actuator (410) is held in place by a wall of the first chamber (110) that is different from the wall (121) comprising the first and second gas passages (111, 112).

4. Gas generator according to claim 2 or claim 3, **characterised in that** the second actuator (410) is arranged on an external wall of the gas generator.

5. Gas generator according to one of claims 1 to 4, **characterised in that** the first discharge orifice (130) is closed by a first cover (122), **in that** the second discharge orifice is closed by a second cover, **in that** the first igniter (310) is adapted to control a first mechanism (300) with a support that is movable:
- from a first position in which the movable support supports the first and second covers in order to absorb some of the forces applied to the first and second covers by the compressed gases,
- to a second position in which the movable support no longer supports the first and second covers.

6. Gas generator according to one of claims 1 to 5, **characterised in that** it comprises a diffusion chamber (500) arranged between the first and second gas reservoirs.

7. Gas generator according to one of claims 1 to 6, **characterised in that** the first actuator (310) is an electro-pyrotechnic igniter.

8. Gas generator according to one of claims 2 and 3 to 7 when dependent on claim 2, **characterised in that** the second actuator (410) is an electro-pyrotechnic igniter.

9. Gas generator according to claim 1, **characterised in that** the shut-off mechanism (300) comprises a cover (120) covering the second gas passage (112) and adapted to rupture if the pressure difference between the first and second chambers is greater than a predetermined pressure difference.

10. Gas generator according to one of claims 1 to 9, **characterised in that** the gas in the first gas reservoir (100) comprises hydrogen and **in that** the gas in the second gas reservoir (200) comprises oxygen.

11. Safety module comprising at least one gas generator according to one of claims 1 to 10.

12. Motor vehicle comprising at least one gas generator according to one of claims 1 to 10.
